(19) **Europäisches Patentamt / European Patent Office / Office européen des brevets**

(11) **EP 4 578 896 A1**

(12) **EUROPEAN PATENT APPLICATION**
published in accordance with Art. 153(4) EPC

(43) Date of publication:
02.07.2025  Bulletin 2025/27

(21) Application number: 23857464.4

(22) Date of filing: 10.03.2023

(51) International Patent Classification (IPC):
*C08J 5/18* (2006.01)    *C08L 67/02* (2006.01)

(52) Cooperative Patent Classification (CPC):
C08J 5/18; C08L 67/02

(86) International application number:
PCT/KR2023/003295

(87) International publication number:
WO 2024/043423 (29.02.2024 Gazette 2024/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.08.2022  KR 20220107641
09.03.2023  KR 20230031094

(71) Applicant: SK microworks Co., Ltd.
Chungcheongbuk-do 27818 (KR)

(72) Inventors:
• LEE, Sang Hyun
  Seoul 07793 (KR)
• PARK, Eun Young
  Seoul 07793 (KR)
• BAEK, Sang Hyun
  Seoul 07793 (KR)
• CHOI, Hong Jun
  Seoul 07793 (KR)
• HAN, Jaeil
  Seoul 07793 (KR)

(74) Representative: Dehns
10 Old Bailey
London EC4M 7NG (GB)

(54) **RECYCLED PET FILM MANUFACTURED USING RECYCLED CHIPS**

(57) The present invention may provide recycled chips having a significantly low melt resistivity and an excellent dispersivity for metallic compounds, and a recycled PET film made entirely of the recycled chips or at least 95% by weight thereof may exhibit the effects of the recycled chips through remarkable transparency, small difference in chromaticity, and a small number of pinholes or by preventing the formation of fracture holes.

EP 4 578 896 A1

## Description

### Technical Field

The following disclosure relates to recycled chips manufactured using waste polyethylene terephthalate (PET) and a Casting Processing Auxiliaries, a recycled PET film manufactured using the recycled chips, and a method of manufacturing the recycled PET film.

### Background Art

Polyethylene terephthalate (PET) has been used in various fields such as clothing, packaging containers, home appliances, automobiles, and films because it has excellent durability, processability, and thermal stability. However, since PET has a large porosity and is not biodegradable, it is difficult to dispose of waste PET, resulting in serious environmental pollution problems in the landfill or incineration process.

Therefore, a technology of recycling waste PET to solve an increase in cost due to the depletion of petroleum resources and environmental pollution problems has been spotlighted.

A recycling process for recycling waste PET includes sorting, Particle removal, cleaning, and metal separation steps, and recycled PET that has undergone the recycling process is manufactured into clothing, packaging containers, home appliances, automobiles, films, and the like. However, the recycled PET still has processability and physical properties inferior to those of virgin PET, and its use is limited.

In particular, since a recycled PET film manufactured using waste PET requires more strict processing conditions than those of other molded articles, and is manufactured by being stretched to 3 to 5 times the original lengths in transverse and longitudinal directions, there are many restrictions such as physical properties of a PET resin to be used, conditions of a heat treatment process, and a content of additives. In addition, since various grades of waste PET are mixed together, it is more difficult to process waste PET to recycle it into a film.

Accordingly, the recycled PET film manufactured using waste PET not only has physical properties such as transparency, color, and gloss that are significantly inferior to those of a virgin PET film manufactured using virgin PET, but also causes a problem in that a defect rate greatly increases during a manufacturing process. Therefore, there is a technical limitation in manufacturing a PET film using a large amount of waste PET.

In recent years, attempts have been made to solve the problem of low processability of waste PET by adding waste PET and various metal compounds, but aggregation of the metal compounds on a surface of the recycled PET film occurs due to low dispersibility of the waste PET and the metal compounds and the addition of excessive metal compounds.

Therefore, in order to manufacture a recycled PET film using waste PET, development of a novel technology for implementing excellent film processability has been demanded, and furthermore, development of a technology for implementing physical properties that are the same as or better than those of the PET film manufactured using virgin PET has been demanded.

### Disclosure of Invention

### Technical Problem

An embodiment of the present invention is directed to providing recycled chips manufactured using waste polyethylene terephthalate (PET) and a molding enhancer, and a recycled PET film manufactured using the same and having a low color difference value, fewer pinholes, a low haze, and excellent film formability, in order to solve significantly low film formability of waste PET according to the related art.

Another embodiment of the present invention is directed to providing a recycled PET film using recycled chips that suppress the problems of surface properties and processing properties caused by self-aggregation of metal compounds contained in the recycled PET film according to the related art during a processing process, thereby solving the aggregation of the metal compounds in the recycled PET film.

Still another embodiment of the present invention is directed to providing novel recycled chips that may significantly improve surface properties and processability of a film by improving dispersibility by additives, and a recycled PET film manufactured using the same.

Still another embodiment of the present invention is directed to providing recycled chips that may solve the problem in which a large amount of virgin PET is used in the recycled PET film according to the related art in order to improve the dispersibility, surface properties, and processability even when a small amount of virgin PET is used, and a recycled PET film using the same.

Still another embodiment of the present invention is directed to providing a recycled PET film that has a haze of 5% or less, 4% or less, and preferably 3% or less, 2 or fewer pinholes, 1.5 or fewer pinholes, or 1 or fewer pinholes, and preferably 0.7 or fewer pinholes or 0.5 or fewer pinholes, and a color difference value of 70 or less, 65 or less, and preferably 63 or less, when analyzed by the measurement methods defined in the present invention.

Still another embodiment of the present invention is directed to providing a recycled PET film having excellent continuous film formability measured by the analysis method defined in the present invention.

Still another embodiment of the present invention is directed to providing an excellent recycled PET film that realizes the physical properties described above, unlike the related art, even though recycled chips used for manufacturing the recycled PET film of the present invention are manufactured using no virgin PET resin or 5 wt% or less of virgin PET.

**Solution to Problem**

In one general aspect, there is provided a recycled polyethylene terephthalate (PET) film manufactured using 95 wt% or more of recycled chips manufactured using waste PET and a Casting Processing Auxiliaries, wherein the recycled PET film contains 10 to 130 ppm of metal ions derived from the Casting Processing Auxiliaries.

As an exemplary embodiment, the recycled PET film may be manufactured using only recycled chips.

As an exemplary embodiment, the Casting Processing Auxiliaries may contain a magnesium compound, a sodium compound, and a phosphorus compound.

As an exemplary embodiment, the recycled PET film may satisfy the following Expressions 1 to 3:

$$[\text{Expression 1}]$$

$$10 \leq [\text{Mg}] \leq 100$$

$$[\text{Expression 2}]$$

$$0.1 \leq [\text{Na}] \leq 10$$

$$[\text{Expression 3}]$$

$$1 \leq [\text{P}] \leq 10$$

in Expressions 1 to 3, [Mg] is a concentration (ppm) of magnesium ions contained in the recycled PET film, [Na] is a concentration (ppm) of sodium ions contained in the recycled PET film, and [P] is a concentration (ppm) of phosphorus ions contained in the recycled PET film.

As an exemplary embodiment, the recycled PET film may be manufactured further using 100 to 2,000 ppm of an anti-blocking agent.

As an exemplary embodiment, the recycled PET film may be manufactured further using one or two or more selected from the group consisting of a lubricant, a stabilizer, a plasticizer, an ultraviolet stabilizer, a heat stabilizer, a filler, a pigment foaming agent, a viscosity modifier, a processing aid, a flame retardant, an enhancer and a dispersant.

As an exemplary embodiment, an average number of pinholes in the recycled PET film may be 2 or less when measured 10 times in an area of 100 cm$^2$.

As an exemplary embodiment, the recycled PET film may have a haze of 5% or less when measured according to ASTM D1003.

As an exemplary embodiment, the recycled PET film may have a melt specific resistance of 8.0 MΩ or less when measured at 285°C.

In another general aspect, a method of manufacturing a recycled PET film includes: manufacturing recycled chips using waste PET and a Casting Processing Auxiliaries; and manufacturing a recycled PET film using 95 wt% or more of the recycled chips.

As an exemplary embodiment, in the manufacturing of the recycled PET film, an anti-blocking agent may be further used.

As an exemplary embodiment, in the manufacturing of the recycled PET film, the recycled PET film may be manufactured by stretching an unstretched recycled PET Sheet to 3 to 5 times the original lengths in both a machine direction (MD) and a transverse direction (TD).

In still another general aspect, there are provided recycled chips manufactured using waste PET and 50 to 500 ppm of a Casting Processing Auxiliaries.

As an exemplary embodiment, the recycled chips may contain 10 to 130 ppm of metal ions derived from the Casting Processing Auxiliaries.

As an exemplary embodiment, the recycled chips may satisfy the following Expressions 4, 5, and 6:

$$[\text{Expression 4}]$$

$$10 \leq [Mg] \leq 100$$

$$[\text{Expression 5}]$$

$$0.1 \leq [Na] \leq 10$$

$$[\text{Expression 6}]$$

$$1 \leq [P] \leq 10$$

in Expressions 4 to 6, [Mg] is a concentration (ppm) of magnesium ions contained in the recycled chips, [Na] is a concentration (ppm) of sodium ions contained in the recycled chips, and [P] is a concentration (ppm) of phosphorus ions contained in the recycled chips.

In still another general aspect, there is provided a recycled PET film manufactured using waste PET, wherein the recycled PET film has a haze of 5% or less, 2 or fewer pinholes, and a color difference value L of 70 or less.

As an exemplary embodiment, the recycled PET film may contain 95 wt% or more of a waste PET resin and 5 wt% or less of a virgin PET resin.

As an exemplary embodiment, the recycled PET film may have a haze of 4% or less, 1 or fewer pinholes, and a color difference value L of 63 or less.

**Advantageous Effects of Invention**

As set forth above, as an exemplary embodiment of the present invention, the recycled chips are manufactured using the Casting Processing Auxiliaries, such that it is possible to manufacture a recycled PET film having physical properties superior to those of the recycled PET film according to the related art even when 95 wt% or more of the recycled chips are used or only the recycled chips are used. Therefore, a significantly high recycling rate of waste PET may be realized, and thus environmental pollution caused by waste PET may be minimized.

As an exemplary embodiment, the recycled chips are manufactured using the waste PET and the Casting Processing Auxiliaries, such that the waste PET and the Casting Processing Auxiliaries may have excellent miscibility. As a result, the manufactured recycled chips may contain the metal ions derived from the Casting Processing Auxiliaries with an excellent degree of dispersion.

As an exemplary embodiment, the recycled PET film manufactured using the recycled chips may realize both excellent surface properties and optical properties even when the recycled PET film is manufactured using 95 wt% of the recycled chips (that is, 5 wt% or less of the virgin PET resin is used).

Therefore, the recycled PET film according to the present invention is manufactured using the recycled chips having excellent processability, such that it is possible to manufacture a recycled PET film having more excellent physical properties even though it is manufactured using a larger amount of waste PET than the recycled PET film according to the related art.

In addition, the recycled PET film prevents the metal particles or metal ions contained therein from aggregating with each other, such that the recycled PET film may have transparency superior to that of the recycled PET film according to the related art, and may have significantly fewer pinholes and a low color difference value, resulting in significantly improved processability. Therefore, the recycled PET film of the present invention may be more effectively used than the recycled PET film according to the related art.

**Best Mode for Carrying out the Invention**

Hereinafter, recycled chips and a recycled polyethylene terephthalate (PET) film manufactured using the same according to the present invention will be described in detail.

However, unless otherwise defined, all the technical terms and scientific terms used herein have the same meanings as commonly understood by those skilled in the art to which the present invention pertains, and a description for the known function and configuration unnecessarily obscuring the gist of the present invention will be omitted in the following description.

Unless the context clearly indicates otherwise, singular forms used in the present specification may be intended to include plural forms.

In addition, a numerical range used in the present specification includes upper and lower limits and all values within these limits, increments logically derived from a form and span of a defined range, all double limited values, and all possible combinations of the upper and lower limits in the numerical range defined in different forms. Unless otherwise specifically defined in the specification of the present invention, values out of the numerical range that may occur due to experimental errors or rounded values also fall within the defined numerical range.

In the present specification, the expression "comprise(s)" is intended to be an openended transitional phrase having an equivalent meaning to "include(s)", "contain(s)", "have (has)", and "are (is) characterized by", and does not exclude elements, materials, or steps, all of which are not further recited herein.

The term "recycled PET" used in the present specification may refer to PET derived from waste PET and produced by combining components of the present invention.

The term "virgin PET" used in the present specification may refer to PET produced by polymerizing monomers or compounds derived from petroleum.

The term "recycled PET film" used in the present specification may refer to a film manufactured using waste PET.

The term "virgin PET film" used in the present specification may refer to a PET film manufactured using only virgin PET without using recycled PET as a resin component.

The term "metal ions" used in the present specification may refer to metal ions derived from metal compounds of a Casting Processing Auxiliaries, and may also refer to metal ions measured by the inductively coupled plasma (ICP) measurement method and contained in the recycled chips or the recycled PET film.

A recycled PET film according to the related art could not be manufactured when an excessive amount of waste PET was used, but could be processed into a film and manufactured to a usable level when virgin PET was used in an amount of at least 10 wt%, 20 wt%, and even 50 wt%.

In order to solve the above problem, the recycled PET film according to the related art was manufactured using a large amount of additives to solve low PET film formability of waste PET and minimize a content of virgin PET, but additives aggregated on a surface of the recycled PET film due to a large amount of various additives, and the problem of low film formability due to aggregation of the additives associated with a high color difference value and generation of pinholes has not been solved.

As a result of repeatedly conducting studies to solve the problem of the recycled PET film according to the related art, the present inventors have solved the above problem by developing recycled chips manufactured using waste PET and a Casting Processing Auxiliaries solution.

Therefore, as an exemplary embodiment, the present inventors have found that a recycled PET film manufactured using the recycled chips not only did not have the above problem, but also had physical properties superior to those of the recycled PET film according to the related art even when 95 wt% or more of a waste PET resin was contained, thereby completing the present invention.

As an exemplary embodiment of the present invention, recycled chips may be manufactured using waste PET and a Casting Processing Auxiliaries.

In order to solve the problem of the recycled PET film according to the related art, which has to be manufactured using virgin PET in an amount of 10 wt% or more, 20 wt% or more, and even 50 wt% or more due to low film processability of waste PET, the recycled chips are manufactured using a waste PET resin and a Casting Processing Auxiliaries, and a content of the Casting Processing Auxiliaries is controlled, such that it is possible to provide a recycled PET film having fewer pinholes, a low color difference value, and a low haze even when virgin PET is contained in an amount of 5 wt% or less or is not contained.

As an exemplary embodiment, the Casting Processing Auxiliaries may contain, for example, one or two or more selected from metal compounds (metal salts) containing metal cations such as magnesium, sodium, potassium, lithium, manganese, and zinc; and phosphorus compounds such as trimethyl phosphate, triethyl phosphate, and tributyl phosphate.

Even when the Casting Processing Auxiliaries containing the three types of metal compounds is used in a smaller amount than a Casting Processing Auxiliaries containing other metal compounds, recycled chips manufactured using the Casting Processing Auxiliaries may realize significantly excellent recycled PET film formability, and aggregation of metal ions derived from the Casting Processing Auxiliaries with each other is further suppressed in a recycled PET film manufactured using the recycled chips. Therefore, a better transparency and a lower color difference value than the recycled PET film according to the related may be realized.

In addition, a small amount of anions (acetate anions) may remain in the recycled chips manufactured using the Casting Processing Auxiliaries, which may be preferable because the metal ions derived from the Casting Processing Auxiliaries may be contained with a high degree of dispersion.

As an exemplary embodiment, the recycled chips may be manufactured using 50 to 500 ppm of the Casting Processing Auxiliaries, and as another exemplary embodiment, the recycled chips may be manufactured using 50 to 300 ppm or 100 to 300 ppm of the Casting Processing Auxiliaries. However, the range of ppm is not limited thereto, as long as a recycled PET film may be manufactured using 95 wt% of the recycled chips.

The recycled chips manufactured using the Casting Processing Auxiliaries in the above range of ppm prevent aggregation of the metal ions derived from the Casting Processing Auxiliaries, and have a significantly low melt specific resistance, such that the recycled chips implement excellent film formability capable of continuously manufacturing a recycled PET film manufactured using the same. Therefore, a recycled PET film manufactured using 95 wt% or more of the recycled chips or all of the recycled chips may have excellent surface properties and significantly increased transparency due to excellent metal ion dispersion, which may be preferable.

When the recycled chips are manufactured using more than 500 ppm of the Casting Processing Auxiliaries, the metal ions derived from the Casting Processing Auxiliaries are not evenly dispersed and aggregate with each other, and as a result, a haze of a recycled PET film manufactured using the same is increased, and a large number of pinholes and, even worse, broken holes may be generated.

In addition, when the recycled chips are manufactured using less than 50 ppm of the Casting Processing Auxiliaries, a melt specific resistance is increased and film formability is thus decreased, such that a surface roughness of a recycled PET film manufactured using the same is increased, the number of pinholes is increased, and a higher content of virgin PET than the target content desired in the present invention is required, which may lead to a decrease in eco-friendliness. Therefore, the recycled chips manufactured using the Casting Processing Auxiliaries in the above content may be preferable, but the content range is not limited thereto.

As still another exemplary embodiment, the recycled chips may be manufactured using a Casting Processing Auxiliaries solution containing a Casting Processing Auxiliaries, as long as the content of the metal ions derived from the Casting Processing Auxiliaries contained in the recycled chips is satisfied.

Since the Casting Processing Auxiliaries solution is better mixed with recycled PET, recycled chips manufactured using the Casting Processing Auxiliaries solution may contain the metal ions derived from the Casting Processing Auxiliaries with a higher degree of dispersion. In the Casting Processing Auxiliaries solution, the Casting Processing Auxiliaries may be dissolved in an amount of 5 to 50 wt%, 5 to 30 wt%, or 5 to 15 wt%, but the amount of Casting Processing Auxiliaries to be dissolved is not particularly limited as long as physical properties of a recycled PET film manufactured using the same are not impaired.

As an exemplary embodiment, the waste PET may refer to waste PET flakes (waste PET resin) from which only impurities are removed without undergoing a repolymerization process in the order of compression, washing, sorting, crushing, soaking and washing, drying, and metal separation of discarded fibers, packaging materials, containers, and beverage bottles.

As the waste PET, the most usable waste PET is preferable, but as a non-limiting example, one or two or more polyester-based polymers selected from polyethylene terephthalate (PET), polybutylene terephthalate (PBT), polytrimethylene terephthalate (PTT), and polyethylene naphthalate (PEN), or copolymers thereof may be used without limitation.

As an exemplary embodiment, the waste PET may have a weight average molecular weight of 40,000 to 200,000 g/mol, as another exemplary embodiment, the waste PET may have a weight average molecular weight of 100,000 g/mol or less or 40,000 to 80,000 g/mol, but the weight average molecular weight of the waste PET is not limited thereto, as long as physical properties of a recycled PET film manufactured using the same are not deteriorated.

Since the recycled chips are manufactured using the waste PET and the Casting Processing Auxiliaries in the above range, as an exemplary embodiment, the recycled chips may contain 10 to 130 ppm of the metal ions derived from the Casting Processing Auxiliaries, and as another exemplary embodiment, the recycled chips may contain 10 to 120 ppm, 10 to 100 ppm, 10 to 90 ppm, or 10 to 70 ppm of the metal ions derived from the Casting Processing Auxiliaries.

As described above, the recycled chips containing the metal ions in the above range contain the metal ions with excellent film formability and a high degree of dispersion, and a recycled PET film manufactured using the same may have a low haze, fewer pinholes, and a low color difference value, which may be preferable.

As an exemplary embodiment, the recycled chips may satisfy the following Expressions 4, 5, and 6:

[Expression 4]

$$10 \leq [Mg] \leq 100$$

[Expression 5]

$$0.1 \leq [Na] \leq 10$$

[Expression 6]

$$1 \leq [P] \leq 10$$

in Expressions 4 to 6, [Mg] is a concentration (ppm) of magnesium ions contained in the recycled chips, [Na] is a concentration (ppm) of sodium ions contained in the recycled chips, and [P] is a concentration (ppm) of phosphorus ions contained in the recycled chips.

As another exemplary embodiment, in terms of the recycled chips maintaining excellent film formability and having a low content of metal ions, in the recycled chips, [Mg] may be 10 to 70 or 30 to 60, [Na] may be 0.1 to 5 or 0.5 to 3, and [P] may be 1 to 8 or 1 to 5, but [Mg], [Na], and [P] are not limited thereto, as long as physical properties of a recycled PET film manufactured using the same are not impaired.

The magnesium ions, the sodium ions, and the phosphorus ions contained in the recycled chips may be derived from the metal compounds, and may be magnesium ions, sodium ions, and phosphorus ions (phosphorus salts) obtained by measuring the recycled chips by the inductively coupled plasma (ICP) measurement method.

The recycled chips satisfying Expressions 4 to 6 contain the magnesium ions, the sodium ions, and the phosphorus ions in an optimal combination, such that the recycled chips may have a low melt specific resistance even when a smaller amount of these ions are contained. Therefore, a recycled PET film may be manufactured using more recycled PET or only recycled PET.

As an exemplary embodiment, the recycled chips are not particularly limited, but may have an average particle size of 1 to 10 mm, and as another exemplary embodiment, the recycled chips may have an average particle size of 5 to 10 mm.

As an exemplary embodiment of the present invention, a recycled PET film manufactured using 95 wt% of the recycled chips may be provided.

The recycled PET film may be continuously manufactured using the recycled chips even when 95 wt% of the recycled chips are used, and may have significantly improved physical properties than the recycled PET film according to the related art.

As still another exemplary embodiment, the recycled PET film may be manufactured using only recycled chips.

The recycled PET film is manufactured using the recycled chips that realize excellent PET film formability, such that the recycled PET film may have excellent surface properties even when manufactured using only the recycled chips, and it is possible to solve low carbon neutrality which appears because 80% or more of virgin chips are required to manufacture the recycled PET film in the related art.

In addition, the recycled PET film is manufactured using the recycled chips manufactured using a small amount of the Casting Processing Auxiliaries, such that aggregation of the metal particles derived from the Casting Processing Auxiliaries is prevented. As a result, the recycled PET film may have a significantly lower haze and lower color difference value than the recycled PET film according to the related art.

As an exemplary embodiment of the present invention, the recycled PET film may contain 10 to 130 ppm of the metal ions derived from the Casting Processing Auxiliaries, and as another exemplary embodiment, the recycled PET film may contain 10 to 100 ppm, 10 to 90 ppm or 10 to 70 ppm of the metal ions derived from the Casting Processing Auxiliaries.

The metal ions contained in the recycled PET film are derived from the metal ions contained in the recycled chips, the recycled chips have excellent film formability, and the content of the metal ions contained in the PET film satisfies the above range, such that the recycled PET film may have a low surface roughness, fewer pinholes, a low haze, and a low color difference value.

As an exemplary embodiment, the recycled PET film may have a haze of 5% or less, 4% or less, and preferably 3% or less, 2 or fewer pinholes, 1.5 or fewer pinholes, or 1 or fewer pinholes, and preferably 0.7 or fewer pinholes or 0.5 or fewer pinholes, and a color difference value of 70 or less, 65 or less, and preferably 63 or less, when analyzed by the measurement methods defined in the present invention.

Since the recycled PET film may be manufactured using 95 wt% or more of the recycled chips or using only the recycled chips, the recycled PET film may have significantly high carbon neutrality and may have excellent surface properties, excellent transparency, and a low color difference value compared to the recycled PET film according to the related art, which may be preferable.

As an exemplary embodiment, the recycled PET film may satisfy the following Expressions 1 to 3:

[Expression 1]

$$10 \leq [Mg] \leq 100$$

[Expression 2]

$$0.1 \leq [Na] \leq 10$$

[Expression 3]

$$1 \leq [P] \leq 10$$

in Expressions 1 to 3, [Mg] is a concentration (ppm) of magnesium ions contained in the recycled PET film, [Na] is a concentration (ppm) of sodium ions contained in the recycled PET film, and [P] is a concentration (ppm) of phosphorus ions contained in the recycled PET film.

As described above, the recycled PET film is manufactured using the recycled chips containing three types of metal ions, such that the recycled PET film may have the excellent film formability of the recycled chips, and may have a low haze, a low color difference value, and fewer pinholes because it has a lower content of the metal ions.

As another exemplary embodiment, in terms of the recycled PET film having a lower content of metal ions, in the recycled PET film, [Mg] may be 10 to 70 or 30 to 60, [Na] may be 0.1 to 5 or 0.5 to 3, and [P] may be 1 to 8 or 1 to 5, but [Mg], [Na], and [P] are not limited thereto, as long as physical properties of the recycled PET film manufactured using the recycled chips are not impaired.

As an exemplary embodiment, the recycled PET film may be manufactured further using an anti-blocking agent.

As an example, the anti-blocking agent may be one or two or more selected from $NaF$, $MgF_2$, $CaF_2$, $BaF_2$, $SiO_2$, $BaSO_4$, $CeF_3$, $Al_bO_3$, $ZrO_2$, $TiO_2$, $ZnS$, $ZnSe$, and $Ta_2O_5$, and specifically, when the anti-blocking agent contains $SiO_2$, excellent PET film formability may be realized, but the anti-blocking agent is not limited thereto, as long as those skilled in the art may recognize it.

As an exemplary embodiment, the recycled PET film may be manufactured using 100 to 2,000 ppm of the anti-blocking agent, and as another exemplary embodiment, the recycled PET film may be manufactured using 200 to 1,500 ppm or 500 to 1,000 ppm of the anti-blocking agent.

The recycled PET film manufactured using the anti-blocking agent at a concentration in the above range may prevent the manufactured recycled PET films from being sticking or rubbing with each other during a winding step of the manufacturing process, which may be preferable because defects due to scratches may be significantly reduced in the manufactured recycled PET film, but the concentration range of the anti-blocking agent is not limited thereto, as long as the physical properties of the manufactured recycled PET film are not deteriorated.

As an exemplary embodiment, the recycled PET film may be manufactured further using one or two or more additives selected from the group consisting of a lubricant, a stabilizer, a plasticizer, an ultraviolet stabilizer, a heat stabilizer, a filler, a pigment foaming agent, a viscosity modifier, a processing aid, a flame retardant, an enhancer, and a dispersant.

The recycled PET film manufactured further using the additives may have different physical properties depending on the type and content of the additives, and thus may be applied to more diverse industrial fields.

As an exemplary embodiment, a thickness of the recycled PET film is not particularly limited as long as the physical properties are not impaired, but may be 10 to 100 $\mu$m, and specifically 10 to 50 $\mu$m.

The recycled PET film having a thickness in the above range may vary depending on a degree of stretching of an unstretched recycled PET Sheet extracted from a T-die in a machine direction (MD) and a transverse direction (TD) in a method of manufacturing a recycled PET film to be described below, and may have minimal surface scratches, pinholes, and broken holes, which may be preferable. In addition, the recycled PET film having a thickness in the above range may be a single film or a laminated film, and the thickness may be increased as the recycled PET films are laminated.

The recycled PET film is manufactured using only the recycled chips or 95 wt% or more of the recycled chips, the recycled chips being manufactured using the waste PET and a small amount of the Casting Processing Auxiliaries, such that the excellent film processability of the recycled chips is realized and the metal ions contained in the recycled chips do not aggregate with each other. Therefore, the recycled PET film may have remarkable transparency, fewer pinholes, and a low color difference value.

As an exemplary embodiment, the recycled PET film may have a haze of 5% or less, preferably 4% or less, and more preferably 3% or less, when measured according to ASTM D1003.

The haze of the recycled PET film may depend on the content and particle size of impurities included in the recycled PET film and the surface roughness of the recycled PET film, the recycled PET film has a low surface roughness because it has the excellent film formability of the recycled chips, and contains the metal ions derived from the small amount of the Casting Processing Auxiliaries at 130 ppm or less or 100 ppm or less, preferably 70 ppm or less, and more preferably 50 ppm or less, and therefore, the recycled PET film may have a haze in the above range.

As an exemplary embodiment, the recycled PET film may have a melt specific resistance of 8 MΩ or less, preferably 6 MΩ or less or 5 MΩ or less, and more preferably 4 MΩ or less or 3 MΩ or less. Although an upper limit of the melt specific resistance is not limited, but may be 1 MΩ or more or 2 MΩ or more.

The recycled PET film or the recycled chips having a melt specific resistance in the above range have significantly excellent film processability, and thus the surface properties of the manufactured recycled PET film may be excellent, and defects, even breakage, of the manufactured recycled PET film may not occur.

As an exemplary embodiment, the recycled PET film may have a color difference value L of 70 or less, 69 or less, or 67 or less, preferably 65 or less, 64 or less, or 63 or less, and more preferably 61 or less, 60.8 or less, or 60.5 or less, when measured by the measurement method defined in the present invention. A lower limit of the color difference value L is not limited, but may be 60 or more.

The recycled PET film may have a color difference value in the above range because the content of the metal ions derived from the Casting Processing Auxiliaries is significantly low.

As an exemplary embodiment, the recycled PET film may have 2 or fewer pinholes, preferably 1.5 or fewer pinholes or 1 or fewer pinholes, and more preferably 0.8 or fewer pinholes or 0.5 or fewer pinholes, when measured by the measurement method defined in the present invention.

The number of pinholes in the recycled PET film is an average number obtained by 10 times of measurements in an area of 100 cm$^2$ of the recycled PET film, and a maximum number of pinholes in the recycled PET film is 2, such that the recycled PET film may have excellent surface properties and a haze in the above range.

That is, as an exemplary embodiment of the present invention, the recycled PET film may have a haze of 5% or less, 2 or fewer pinholes, and a color difference value L of 70 or less, and as another exemplary embodiment, the recycled PET film may have a haze of 4% or less, 1 or fewer pinholes, and a color difference value L of 63 or less.

Hereinafter, a method of manufacturing a recycled PET film of the present invention will be described.

According to an exemplary embodiment of the present invention, the method of manufacturing a recycled PET film includes: manufacturing recycled chips using waste PET and a Casting Processing Auxiliaries; and manufacturing a recycled PET film using 95 wt% or more of the recycled chips.

As an exemplary embodiment, in the manufacturing of the recycled PET film, 5 wt% or less or 2 wt% or less of virgin chips may be used, or virgin chips may not be used.

As an exemplary embodiment, in the manufacturing of the recycled chips, for example, the recycled chips may be manufactured by melt-compounding a mixture of waste PET flakes and a Casting Processing Auxiliaries or a Casting Processing Auxiliaries solution at 240 to 260°C.

As an exemplary embodiment, in the manufacturing of the recycled PET film, an anti-blocking agent may be further used, and the anti-blocking agent may be contained in virgin chips or the recycled chips, or may be independently added to a Banbury mixer.

When the anti-blocking agent is contained in virgin chips or added independently, the anti-blocking agent contained in the manufactured recycled PET film may have a more excellent degree of dispersion, which may be preferable, but the use of the anti-blocking agent is not particularly limited as long as the physical properties of the manufactured recycled PET film are not deteriorated.

As an exemplary embodiment, in the method of manufacturing a recycled PET film, the anti-blocking agent may be used without limitation as long as the content of the anti-blocking agent in the manufactured recycled PET film satisfies 100 to 2,000 ppm.

As an exemplary embodiment, the manufacturing of the recycled PET film may be performed without limitation as long as it is a process recognized by those skilled in the art, but an unstretched recycled PET Sheet melt-extruded from a T-die (260 to 280°C) may run in close contact with a casting roll and may be cooled to 80°C.

The cooled unstretched recycled PET Sheet may be stretched in a machine direction (MD) and a transverse direction (TD) at 100 to 150°C to manufacture a recycled PET film having a thickness of 10 to 100 μm.

Preferably, the recycled PET film may be manufactured by stretching the unstretched recycled PET film to 3 to 5 times the original lengths in both the MD and TD, but is not limited thereto.

As another exemplary embodiment, in the process of stretching the unstretched recycled PET Sheet in the MD, a temperature may be 80 to 120°C and preferably 100 to 120°C, and the unstretched recycled PET Sheet may be stretched to 3.8 to 4.8 times the original length, and preferably 4.0 to 4.5 times the original length, but the temperature and the degree of stretching are not limited thereto.

In addition, in the process of stretching the unstretched recycled PET Sheet in the TD, a temperature may be 200 to 240°C, preferably 210 to 240°C, and more preferably 220 to 235°C, and the unstretched recycled PET Sheet may be stretched at the same degree of stretching as in the MD.

Hereinafter, the recycled PET film and the method of manufacturing the same will be described in more detail with reference to Examples. However, the following Examples are only reference examples for describing the present invention in detail, and the present invention is not limited thereto and may be implemented in various forms. Unless otherwise defined, all technical terms and scientific terms used herein have the same meaning as commonly understood by those skilled in the art to which the present invention pertains. In addition, the terms used in the present invention are only to effectively describe specific Examples, but are not intended to limit the present invention.

[Measurement methods]

1. Measurement of melt specific resistance

The manufactured recycled chips were put into a vacuum oven and vacuum dried at 150°C for 4 hours, 0.5 g of the dried recycled chips were placed in a groove of a Teflon frame, aluminum electrodes were connected to the ends of the top and bottom of the groove of the Teflon frame, and the Teflon frame was covered, thereby completing a measurement sample.

Subsequently, the measurement sample was put on a hot press at 285°C, the chips were melted for 5 minutes, and the pressure was maintained not to exceed 1.0 MPa, and electrical resistance values after 3 minutes, 5 minutes, 7 minutes, 9 minutes, 11 minutes, and 13 minutes were measured. The resistance value at the time when the measured resistance values (for example: the resistance value measured at 11 minutes or 13 minutes) converged was confirmed.

The same measurement sample was measured twice by the above method, and an average value thereof was calculated.

2. Measurement of number of pinholes

The manufactured PET film was prepared as a sample having an area of 100 cm$^2$, and the sample was imaged using a microscope (DXS-CB, manufactured by Olympus Corporation) at a wavelength of 400 to 700 nm in Bright Filter Mode and then was imaged again in Dark Filter Mode. Voids found in the photograph were defined as pinholes, the number of pinholes was measured, a total of 10 samples were measured for the number of pinholes in the same manner as in the above method, and an average value thereof was calculated.

3. Measurement of haze

A haze was measured according to ASTM D1003, seven pieces were randomly extracted from two locations at the edges and one location at the center of the manufactured recycled PET film, the seven pieces were cut into 5 cm × 5 cm in size, the cut pieces were put into a haze meter (NDH 300A, manufactured by Nippon Denshoku Industries Co., Ltd.), light of a wavelength of 555 nm was transmitted through the cut pieces, hazes were calculated by the following equation, and then an average value excluding the maximum and minimum values was calculated.

$$\text{Haze (\%)} = (\text{Total scattered light/Total transmitted light}) \times 100$$

4. Measurement of color difference value L

The manufactured recycled PET film was prepared as a sample having a size of 100 mm × 100 mm, and the sample was placed between two sample supports. Thereafter, a color difference value L was measured a total of five times with a color difference meter (SE-6000, manufactured by Nippon Denshoku Industries Co., Ltd.), and an average thereof was calculated.

5. Film formability

In a process of continuously forming PET films for 1 hour in a film forming machine, film defects and equipment errors were observed.

It was marked as ◎ when the films were formed normally for 1 hour, ○ when a part of the film was torn 2 times or less, △ when a part of the film was torn 3 to 5 times, and × when a part of the film was torn 6 times or more or when the film was cut.

6. ICP analysis

2 g of a sample obtained from the manufactured recycled PET film was weighed, and the sample was put into a 100 ml Erlenmeyer flask. Thereafter, 6 ml of sulfuric acid was put into the Erlenmeyer flask containing the sample with a measuring pipette to prepare a specimen, the specimen was placed on a heating plate, a temperature of the heating plate was heated at 220°C until the specimen was completely carbonized, and it took about 2 to 3 hours. Thereafter, the temperature was raised to 450°C, and the specimen was heated until sulfuric acid was circulated.

Thereafter, the Erlenmeyer flask containing the carbonized specimen was allowed to cool, 2 ml of nitric acid and 2 ml of perchloric acid were slowly added, and the specimen was heated again at 380°C. Heating was repeated after the cooling and the addition of nitric acid and perchloric acid until the specimen solution became transparent, the specimen solution was further heated at 380°C until white smoke of sulfuric acid appeared in the transparent specimen solution, and the heated specimen solution was allowed to cool for 30 minutes. About 10 ml of distilled water was added to and mixed with the cooled specimen, and the mixture was allowed to cool for 20 minutes, thereby preparing a specimen solution for measurement.

Thereafter, the prepared specimen solution for measurement was put into a 50 ml flask, distilled water was added, and the specimen solution for measurement was left for 1 hour. The standard solution in the carbonization sequence was put into a 100 ml-volumetric flask, a concentration of the standard solution was adjusted in accordance with the concentration of the sample to be measured, and the resulting solution was applied with purified water.

Thereafter, the pre-treated specimen and the standard solution (1,000 ppm) were measured with ICP-OES (Avio-550Max, manufactured by PerkinElmer, Inc.), and the content of each of the metal ions was calculated by the following equation according to the measured results.

$$\text{Content } (ppm) = \frac{\text{Measured concentration } (ppm)}{\text{Specimen amount } (g)} \times \text{Volume } (ml)$$

[Examples 1 to 8]

In order for each of magnesium acetate (MgAc), sodium acetate (NaAc), and trimethyl phosphate (TMP) with respect to the total amount of input to a compounding equipment to satisfy ppm shown in Table 1, 10 wt% of a Casting Processing Auxiliaries containing the three types of metal compounds and 90 wt% of acetonitrile were stirred to prepare a Casting Processing Auxiliaries solution in advance.

Thereafter, waste PET flakes having a weight average molecular weight of 56,000 g/mol and the prepared Casting Processing Auxiliaries solution were put into the compounding equipment (EREMA Engineering Recycling Maschinen und Anlagen Ges.m.b.H.) to manufacture recycled chips, the manufactured recycled chips and 700 ppm of $SiO_2$ were put into a film forming machine, and then a recycled PET film having a thickness of 12 μm was manufactured.

Thereafter, the manufactured recycled chips and recycled PET film were measured by the above measurement methods. The results are shown in Table 2.

[Comparative Example 1]

A recycled PET film was manufactured in the same manner as that of Example 1, except that the recycled chips were manufactured without using the Casting Processing Auxiliaries.
Thereafter, the manufactured recycled PET film was measured by the above measurement methods. The results are shown in Table 2.

[Comparative Example 2]

A recycled PET film was manufactured in the same manner as that of Example 1, except that the recycled chips were manufactured using 40 ppm of the Casting Processing Auxiliaries.

Thereafter, the manufactured recycled PET film was measured by the above measurement methods. The results are shown in Table 2.

[Comparative Example 3]

A recycled PET film was manufactured in the same manner as that of Example 1, except that the recycled chips were manufactured using 600 ppm of the Casting Processing Auxiliaries.

Thereafter, the manufactured recycled PET film was measured by the above measurement methods. The results are shown in Table 2.

[Comparative Example 4]

Virgin chips (master batch chips) and 700 ppm of $SiO_2$ were put into the film forming machine, and a virgin PET film having a thickness of 12 $\mu$m was manufactured.
Thereafter, the virgin chips and the virgin PET film were measured by the above measurement methods. The results are shown in Table 2.

[Comparative Example 5]

A virgin PET film was manufactured in the same manner as that of Example 1, except that virgin chips were put into the film forming machine instead of the recycled chips.
Thereafter, the virgin chips and the virgin PET film were measured by the above measurement methods. The results are shown in Table 2.

[Table 1]

|  | PET Resin | MgAc (ppm) | NaAc (ppm) | TMP (ppm) | Total amount of Casting Processing Auxiliaries (ppm) | $SiO_2$ (ppm) |
|---|---|---|---|---|---|---|
| Example 1 | 100 wt% of recycled chips | 48 | 0.25 | 1.75 | 50 | 700 |
| Example 2 |  | 147 | 0.75 | 2.25 | 150 | 700 |
| Example 3 |  | 195 | 1 | 4 | 200 | 700 |
| Example 4 |  | 390 | 2 | 8 | 400 | 700 |
| Example 5 |  | 487.5 | 2.5 | 10 | 500 | 700 |
| Example 6 |  | 200 | - | - | 200 | 700 |
| Example 7 |  | - | 195 | 5 | 200 | 700 |
| Example 8 |  | 195 | - | 5 | 200 | 700 |
| Comparative Example 1 | 100 wt% of virgin chips | - | - | - | - | 700 |
| Comparative Example 2 |  | 38.4 | 0.2 | 1.4 | 40 | 700 |
| Comparative Example 3 |  | 585 | 3 | 12 | 600 | 700 |
| Comparative Example 4 |  | - | - | - | - | 700 |
| Comparative Example 5 |  | 48 | 0.25 | 1.75 | 50 | 700 |

[Table 2]

|  | Melt specific resistance (M$\Omega$) | Haze (%) | Number of pinholes | Color difference value L | Continuous film formability | $Mg^{2+}$ (ppm) | $Na^+$ (ppm) | $PO_4^{3-}$ (ppm) |
|---|---|---|---|---|---|---|---|---|
| Example 1 | 7.7 | 3.8 | 0.7 | 60.08 | ◎ | 10 | 0.25 | 1.0 |
| Example 2 | 5.0 | 2.9 | 0.4 | 60.12 | ◎ | 37 | 0.75 | 1.5 |
| Example 3 | 2.5 | 3.4 | 0.2 | 62.61 | ◎ | 49 | 1 | 2 |
| Example 4 | 5.5 | 3.2 | 0.9 | 60.27 | ◎ | 91 | 2 | 4.5 |
| Example 5 | 2.4 | 4.1 | 0.5 | 64.21 | ○ | 122.5 | 2.5 | 5 |
| Example 6 | 2.3 | 3.7 | 1.1 | 66.55 | ○ | 50 | - | - |
| Example 7 | 4.2 | 3.4 | 1.2 | 68.23 | ○ | - | 48 | 2.4 |
| Example 8 | 6.4 | 4.9 | 1.6 | 69.58 | ○ | 48 | - | 2.5 |

(continued)

| | Melt specific resistance (MΩ) | Haze (%) | Number of pinholes | Color difference value L | Continuous film formability | $Mg^{2+}$ (ppm) | $Na^+$ (ppm) | $PO_4^{3-}$ (ppm) |
|---|---|---|---|---|---|---|---|---|
| Comparative Example 1 | 20.3 | 6.7 | 2.3 | 72.15 | × | - | - | - |
| Comparative Example 2 | 16.8 | 5.8 | 2.2 | 78.45 | Δ | 5.1 | 0.01 | 0.2 |
| Comparative Example 3 | 2.3 | 8.4 | 2.1 | 78.45 | × | 147 | 3 | 8 |
| Comparative Example 4 | 3.5 | 4.8 | 0.2 | 55.01 | ◎ | 15 | 0.5 | 1.5 |
| Comparative Example 5 | 1.1 | 4.1 | 0.7 | 75.40 | Δ | 25 | 0.75 | 2.5 |

Referring to Table 2, in Examples 1 to 8, it was confirmed that the melt specific resistance was 8 MΩ or less, which showed that the continuous film formability was excellent, and the manufactured recycled PET film had a haze of 5% or less, 2 or fewer pinholes, and a color difference value of 70 or less.

On the other hand, referring to Table 2, in Comparative Examples 1 and 2, it was confirmed that the melt specific resistance was significantly higher than those in Examples, the continuous film formation was impossible, and in the case of the manufactured recycled PET film, the haze, the number of pinholes, and the color difference value were significantly high. In addition, in Comparative Example 3, it was confirmed that the melt specific resistance was low, but the haze and the color difference value were higher than those in Examples.

In addition, referring to Table 2, in Comparative Examples 4 and 5 in which the PET films were manufactured using the virgin chips, it was confirmed that the PET film of Comparative Example 5 had a lower continuous film formability and a higher color difference value than those in Examples.

The results of Table 2 will be described in more detail. As a result of ICP analysis of Examples and Comparative Examples, it was confirmed that 10 to 130 ppm of the metal ions derived from the Casting Processing Auxiliaries were contained, but in Comparative Examples 1 to 3, the metal ions were not contained in the range of 10 to 130 ppm. This suggests that only when the metal ions are contained in the above range, excellent film formability may be provided, and at the same time, the manufactured recycled PET film may satisfy a haze of 5% or less, a color difference value of 70 or less, and the number of pinholes of 2 or less.

In addition, in Comparative Example 5 in which the PET film was manufactured using the virgin chips and the Casting Processing Auxiliaries, it was confirmed that the color difference value was increased and the continuous film formability was decreased. This suggests that the various additives contained in the virgin chips of Comparative Example 5 have low miscibility with the Casting Processing Auxiliaries, and thus the aggregation of metal ions is further increased than in the recycled PET film of each of Examples manufactured using the recycled chips.

Hereinabove, although the present invention has been described by specific matters and limited Examples and Comparative Examples, they have been provided only for assisting in the entire understanding of the present invention. Therefore, the present invention is not limited to the Examples. Various modifications and changes may be made by those skilled in the art to which the present invention pertains from this description.

Therefore, the spirit of the present invention should not be limited to the described embodiments, but the claims and all modifications equal or equivalent to the claims are intended to fall within the spirit of the present invention.

## Claims

1. A recycled polyethylene terephthalate (PET) film manufactured using 95 wt% or more of recycled chips manufactured using waste PET and a Casting Processing Auxiliaries,
   wherein the recycled PET film contains 10 to 130 ppm of metal ions derived from the Casting Processing Auxiliaries.

2. The recycled PET film of claim 1, wherein the recycled PET film is manufactured using only recycled chips.

3. The recycled PET film of claim 1, wherein the Casting Processing Auxiliaries contains a magnesium compound, a sodium compound, and a phosphorus compound.

4. The recycled PET film of claim 1, wherein the recycled PET film satisfies the following Expressions 1 to 3:

$$[\text{Expression 1}]$$

$$10 \leq [\text{Mg}] \leq 100$$

$$[\text{Expression 2}]$$

$$0.1 \leq [\text{Na}] \leq 10$$

$$[\text{Expression 3}]$$

$$1 \leq [\text{P}] \leq 10$$

in Expressions 1 to 3,

[Mg] is a concentration (ppm) of magnesium ions contained in the recycled PET film,
[Na] is a concentration (ppm) of sodium ions contained in the recycled PET film, and
[P] is a concentration (ppm) of phosphorus ions contained in the recycled PET film.

5. The recycled PET film of claim 1, wherein the recycled PET film is manufactured further using 100 to 2,000 ppm of an anti-blocking agent.

6. The recycled PET film of claim 1, wherein the recycled PET film is manufactured further using one or two or more selected from the group consisting of a lubricant, a stabilizer, a plasticizer, an ultraviolet stabilizer, a heat stabilizer, a filler, a viscosity modifier, a processing aid, a flame retardant, an enhancer and a dispersant.

7. The recycled PET film of claim 1, wherein an average number of pinholes in the recycled PET film is 2 or less when measured 10 times in an area of 100 cm$^2$.

8. The recycled PET film of claim 1, wherein the recycled PET film has a haze of 5% or less when measured according to ASTM D1003.

9. The recycled PET film of claim 1, wherein the recycled PET film has a melt specific resistance of 8.0 MΩ or less when measured at 285°C.

10. A method of manufacturing a recycled PET film, the method comprising:

    manufacturing recycled chips using waste PET and a Casting Processing Auxiliaries; and
    manufacturing a recycled PET film using 95 wt% or more of the recycled chips.

11. The method of claim 10, wherein in the manufacturing of the recycled PET film, an anti-blocking agent is further used.

12. The method of claim 10, wherein in the manufacturing of the recycled PET film, the recycled PET film is manufactured by stretching an unstretched recycled PET Sheet to 3 to 5 times the original lengths in both a machine direction (MD) and a transverse direction (TD).

13. Recycled chips manufactured using waste PET and 50 to 500 ppm of a Casting Processing Auxiliaries.

14. The recycled chips of claim 13, wherein the recycled chips contain 10 to 130 ppm of metal ions derived from the Casting Processing Auxiliaries.

15. The recycled chips of claim 13, wherein the recycled chips satisfy the following Expressions 4, 5, and 6:

[Expression 4]

$$10 \leq [\text{Mg}] \leq 100$$

[Expression 5]

$$0.1 \leq [\text{Na}] \leq 10$$

[Expression 6]

$$1 \leq [\text{P}] \leq 10$$

in Expressions 4 to 6,

[Mg] is a concentration (ppm) of magnesium ions contained in the recycled chips,
[Na] is a concentration (ppm) of sodium ions contained in the recycled chips, and
[P] is a concentration (ppm) of phosphorus ions contained in the recycled chips.

16. A recycled PET film manufactured using waste PET, wherein the recycled PET film has a haze of 5% or less, 2 or fewer pinholes, and a color difference value L of 70 or less.

17. The recycled PET film of claim 16, wherein the recycled PET film contains 95 wt% or more of a waste PET resin and 5 wt% or less of a virgin PET resin.

18. The recycled PET film of claim 16, wherein the recycled PET film has a haze of 4% or less, 1 or fewer pinholes, and a color difference value L of 63 or less.

## INTERNATIONAL SEARCH REPORT

| | International application No. |
|---|---|
| | **PCT/KR2023/003295** |

**A. CLASSIFICATION OF SUBJECT MATTER**

**C08J 5/18**(2006.01)i; **C08L 67/02**(2006.01)i

According to International Patent Classification (IPC) or to both national classification and IPC

**B. FIELDS SEARCHED**

Minimum documentation searched (classification system followed by classification symbols)

C08J 5/18(2006.01); B29C 48/08(2019.01); C08G 63/78(2006.01); C08G 63/82(2006.01); C08K 3/10(2006.01); C08L 67/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폐PET(waste polyethylene terephthalate), 성형개선제(molding agent), 마그네슘 (magnesium), 재생 필름(recycle film), 헤이즈(haze), 핀홀(pin hole), 색차(color difference)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | KR 10-2022-0097273 A (KOLON INDUSTRIES, INC.) 07 July 2022 (2022-07-07)<br>See paragraphs [0029], [0038]-[0046] and [0083]-[0085], and claims 1-15. | 10-12<br><br>1-9,13-18 |
| Y | KR 10-1997-0010821 A (CHEIL SYNTHETICS INC.) 27 March 1997 (1997-03-27)<br>See claim 1. | 1-9,13-18 |
| A | KR 10-2013-0035897 A (KOLON INDUSTRIES, INC.) 09 April 2013 (2013-04-09)<br>See claims 1, 2, 3 and 11. | 1-18 |
| A | KR 10-1996-0022803 A (CHEIL SYNTHETICS INC.) 18 July 1996 (1996-07-18)<br>See claim 1. | 1-18 |
| A | KR 10-2003-0094236 A (TOYO BOSEKI KABUSHIKI KAISHA) 11 December 2003 (2003-12-11)<br>See paragraph [0022], and claim 6. | 1-18 |

☐ Further documents are listed in the continuation of Box C.　　☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 June 2023** | **09 June 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/003295**

| Patent document cited in search report | | | Publication date (day/month/year) | Patent family member(s) | | | Publication date (day/month/year) |
|---|---|---|---|---|---|---|---|
| KR | 10-2022-0097273 | A | 07 July 2022 | None | | | |
| KR | 10-1997-0010821 | A | 27 March 1997 | None | | | |
| KR | 10-2013-0035897 | A | 09 April 2013 | CN | 103842437 | A | 04 June 2014 |
| | | | | CN | 103842437 | B | 17 August 2016 |
| | | | | JP | 2014-525491 | A | 29 September 2014 |
| | | | | JP | 5856299 | B2 | 09 February 2016 |
| | | | | KR | 10-1862620 | B1 | 31 May 2018 |
| | | | | TW | 201313777 | A | 01 April 2013 |
| | | | | TW | I557151 | B | 11 November 2016 |
| | | | | US | 2014-0288209 | A1 | 25 September 2014 |
| | | | | US | 9213126 | B2 | 15 December 2015 |
| | | | | WO | 2013-048103 | A1 | 04 April 2013 |
| KR | 10-1996-0022803 | A | 18 July 1996 | None | | | |
| KR | 10-2003-0094236 | A | 11 December 2003 | CN | 100480300 | C | 22 April 2009 |
| | | | | CN | 101412805 | A | 22 April 2009 |
| | | | | CN | 101412805 | B | 19 October 2011 |
| | | | | CN | 1486336 | A | 31 March 2004 |
| | | | | JP | 2002-322252 | A | 08 November 2002 |
| | | | | JP | 2002-322253 | A | 08 November 2002 |
| | | | | JP | 2002-322254 | A | 08 November 2002 |
| | | | | JP | 2002-332337 | A | 22 November 2002 |
| | | | | JP | 2002-363274 | A | 18 December 2002 |
| | | | | JP | 2003-082083 | A | 19 March 2003 |
| | | | | JP | 2003-171452 | A | 20 June 2003 |
| | | | | JP | 2003-171454 | A | 20 June 2003 |
| | | | | JP | 2007-186720 | A | 26 July 2007 |
| | | | | JP | 4275893 | B2 | 10 June 2009 |
| | | | | JP | 4415239 | B2 | 17 February 2010 |
| | | | | KR | 10-0872634 | B1 | 09 December 2008 |
| | | | | KR | 10-0905831 | B1 | 02 July 2009 |
| | | | | KR | 10-2008-0021165 | A | 06 March 2008 |
| | | | | TW | 200526706 | A | 16 August 2005 |
| | | | | TW | 276646 | A | 21 March 2007 |
| | | | | TW | 276646 | B | 21 March 2007 |
| | | | | TW | I276646 | B | 21 March 2007 |
| | | | | TW | I309246 | A | 01 May 2009 |
| | | | | TW | I309246 | B | 01 May 2009 |
| | | | | WO | 02-057335 | A1 | 25 July 2002 |
| | | | | WO | 0205-7335 | A1 | 25 July 2002 |

Form PCT/ISA/210 (patent family annex) (July 2022)